# EUROPEAN PATENT SPECIFICATION

(11) **EP 1 922 597 B1**
(45) Date of publication and mention of the grant of the patent: **16.09.2020**
(21) Application number: 06788657.2
(22) Date of filing: 27.07.2006
(51) Int. Cl.: G05B 23/02

(54) **FAULT DATA MANAGEMENT**
FEHLERDATEN-VERWALTUNG
GESTION DES DONNEES D'ANOMALIE

(30) Priority: 08.08.2005 US 199399
(43) Date of publication of application: 21.05.2008
(73) Proprietor: The Boeing Company, Chicago, IL 60606-1596 (US)
(72) Inventor: YUKAWA, Steven, J., Seattle, WA 98178 (US); ANSTEY, Tim, W., Seattle, WA 98112 (US); ECOLA, Steven, R., Sammamish, WA 98075 (US); ALLEN, David, L., Kent, WA 98031 (US)
(74) Representative: Korenberg, Alexander Tal
(86) International application number: PCT/US2006/029203
(87) International publication number: WO 2007/019070

(56) References cited:
- US-A- 4 943 919

## Description

### FIELD OF INVENTION

The invention relates generally to the capture and recording of mobile platform fault report data that occur onboard a mobile platform. More particularly, the invention relates to the coordination of fault data sent to a remote central computer system (CCM) from a central maintenance computer (CMC) onboard the mobile platform with fault data sent to the CCM from an electronic travel aid utilized by mobile platform crew to record fault data.

### BACKGROUND OF THE INVENTION

Airlines and other mobile platform providers, such as companies that provide passenger and/or cargo transportation by bus, train or ship, often maintain travel metrics and fault data during operation of the mobile platform. Metrics data generally include information and data regarding such things as origin and destination information for the mobile platform, passenger information and flight crew information, travel times, fueling information, etc. Fault data generally include data detailing problems with the mobile platform that were detected during the operation of the mobile platform, e.g. a solenoid misfire or the temperature of a component is out of range. Some known mobile platform fault detection and recording systems automatically detect faults that occur and transmit the fault data to a remote central computer system (CCS) where it is stored and made accessible by maintenance crews. Additionally, some known mobile platforms implement electronic travel aids utilized by crew of the mobile platform to enhance ease and efficiency of many tasks performed during operation of the mobile platform. This fault data is used to determine whether the mobile platform meets regulatory and operational requirements and can be re-dispatched or redeployed.

Furthermore, some mobile platform providers have implemented logbook applications in the electronic travel aids that are utilized by the mobile platform crew to record faults observed during operation of the mobile platform. Such electronic logbooks typically include electronic forms that are utilized by crew onboard the mobile platform during operation of the mobile platform. Typically, the electronic travel aids need to be removed from the mobile platform to download the metric and logbook data to the remote CCS where the data is stored in electronic databases. Recently, some mobile platform providers have implemented software applications that communicate, i.e. download, the data from the electronic travel aids, e.g. metric data and logbook data, to the CCS.

US4943919 states according to its abstract an onboard central maintenance computer system integrated into an aircraft system and a system for collecting and analyzing complete maintenance information. The central maintenance computer system (CMCS) collects, consolidates, and reports LRU faults data in order to aid flight crew and maintenance personnel in maintenance procedures. An aircraft system in which the CMCS is used includes a plurality of line replaceable units (LRU), a communication system through which the LRUs can transmit LRU fault data and receiver test initiation commands, and an operator interface device for receiving input commands, displaying data, and communicating with other systems. The central maintenance computer system includes a data transfer system, an input/output processor, a memory device, and a control processing system. During flight, the control processing system controls the collection of complete LRU fault data; generates an isolated fault from the LRU fault data; associates the isolated fault with one of the maintenance messages stored in the memory device; and causes the associated maintenance message to be stored as an active maintenance message in fault history.

US2005/0148327 states according to its abstract a system that comprises a vehicle (e.g., aircraft) including a plurality of modules (e.g., line-replaceable units-LRU's) capable of communicating over a plurality of buses (e.g., Mil-Std-1553 buses). The system also includes an advanced wireless open data controller (AWOC) capable of receiving data output onto the buses of the vehicle during operation of the vehicle, such as during flight of an aircraft. The AWOC is also capable of comparing the output data to a database of known events of the modules. Then, when the output data matches a known event for at least one module, the AWOC is capable of identifying an event. The AWOC can package event data including the identified event. A data unit, also included within the system, is capable of transmitting the packaged event data external to the vehicle at least partially over a wireless communication link.

Although the mobile platform fault detection and recording systems accurately and systematically monitor many potential mobile platform faults, there currently is no automated link between the fault detection and recording systems and electronic logbooks. Therefore, the mobile platform crew has to manually complete the electronic forms generated by the logbook application. Such fault data entry tasks are time consuming, prone to errors, and often lack enough detail for efficient mobile platform troubleshooting and repair, which increase maintenance costs and reduce reliability.

Often, the metric and fault data are recorded by hand on preprinted forms during operation of the mobile platform and maintained in metrics and maintenance logbooks. The logbooks are generally carried off the mobile platform by crew of the mobile platform when the mobile platform reaches a mobile platform terminal at its destination. The metrics and fault data are then keyed into a ground based computer system to be stored in an electronic database. The ground based computer system may include a "master" logbook database, operational decision aid systems, e.g. mobile platform health management systems, and/or data repository systems, e.g. maintenance history systems. Often the forms can be multi-part forms where each part goes to a different department at the mobile platform terminal. Additionally, corrective maintenance actions taken to address the fault reports need to be recorded in the logbooks to be available to crew members of the mobile platform when the mobile platform departs from the terminal for another destination. Such data entry tasks are time consuming and provide data to using systems after significant time delay. Furthermore, this paper logbook process is labor intensive and has significant inefficiencies inherent in the process. Further yet, faults may occur during high workload periods on the mobile platform causing the mobile platform operators to delay recording or not record certain information, such as fault codes that allow direct correlation to system generated fault messages. Such delayed or non recording can inhibit timely clearing of the fault condition by the mobile platform maintenance crew.

Recently, some mobile platform providers have implemented electronic metrics and fault data recordation and maintenance systems where an electronic logbook is utilized. The electronic logbook includes electronic forms that are utilized by crew onboard the mobile platform during operation of the mobile platform. Although the electronic logbooks increase efficiency, they, too, generally need to be removed from the mobile platform to download the data to the ground based computer system and stored in electronic databases. The ground based systems can provide the capability to efficiently process metrics and fault information and can help prioritize which faults should be addressed and to identify the particular maintenance procedure needed to address the particular fault report. Since the clearing of a fault may be required to dispatch the mobile platform on another mission, this delay can affect the schedule of mobile platform operator.

With the prevalence of contemporary communication, downloading the metrics and fault data from the electronic logbooks to the ground based systems while the electronic logbooks remain on board the mobile platforms is possible. However, mobile platforms move throughout the country and the world with a variety of electronic communication connectivity options and availability en-route and at each mobile platform terminal. For example, connectivity at certain mobile platform terminals may employ IEEE 802.11 or global packet radio service (GPRS) wireless protocols, while other terminals may employ VHF and satellite networks. Yet other terminals may utilize broadband satellite networks and still other terminals may not have communication connectivity availability or use a direct wired connection. VHF and satellite communications are available for transfer of data while the mobile platform is en-route.

Therefore, there is a need to move mobile platform metrics and fault data and maintenance records between such electronic logbooks and the ground based mobile platform terminal systems in an efficient, repeatable and secure automated manner.

Thus, there is need to enable such electronic logbooks to automatically monitor mobile platform fault detection and recording systems, automatically create draft fault reports in the logbooks, and provide the crew with automated messages that a fault report has been automatically generated, whereby the crew can review and verify the fault report.

### BRIEF SUMMARY OF THE INVENTION

A system and method for managing mobile platform fault data are provided as defined in independent claims 1 and 9 respectively.

### BRIEF DESCRIPTION OF THE DRAWINGS

The present invention will become more fully understood from the detailed description and accompanying drawings, wherein;
FIG. 1 is a block diagram of a data acquisition and storage (DASS) system, in accordance with various embodiments of the present invention;
Figure 2 is a flow chart illustrating an operation of the DASS, shown in Figure 1, whereby metric and fault data is automatically sensed, recorded, sent from an onboard computer system to a central computer system, and correlated in accordance with various embodiments of the present invention;
Figure 3 is a flow chart illustrating an operation of the DASS, whereby metric and fault data is sent from an onboard computer system (OCS) to a central computer system (CCS), shown in Figure 1, in accordance with various embodiments of the present invention; and
Figure 4 is a flow chart illustrating an operation of the DASS, whereby the CCS sends maintenance log data to the OCS, in accordance with various embodiments of the present invention.

Corresponding reference numerals indicate corresponding parts throughout the several views of drawings.

### DETAILED DESCRIPTION OF THE INVENTION

The following description of the preferred embodiments is merely exemplary in nature and is in no way intended to limit the invention, its application or uses. Additionally, the advantages provided by the preferred embodiments, as described below, are exemplary in nature and not all preferred embodiments provide the same advantages or the same degree of advantages.

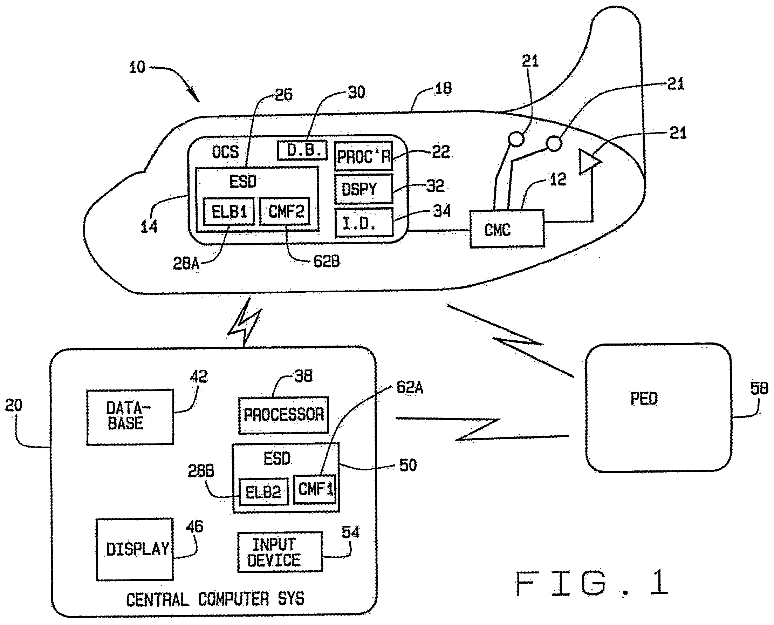

Figure 1 is a block diagram of a data acquisition and storage system (DASS) 10, in accordance with various embodiments of the present invention. The DASS 10 includes at least one central maintenance computer (CMC) 12 and at least one onboard computer system (OCS) 14 onboard a mobile platform 18. Although the mobile platform 18 is illustrated as an aircraft, the invention is not limited to aircraft applications. That is, the mobile platform 18 could be any mobile platform such as an aircraft, bus, train or ship. The DASS 10 additionally includes at least one central computer system (CCS) 20 remotely located from the mobile platform 18 and configured to communicate with the CMC 12 and the OCS 14. Communications between the OCS 14, i.e. the CMC 12, and the CCS 20 can be established using any suitable wired or wireless communications link, protocol or service. For example, in various embodiments a wireless connection is established between the OCS 14 and the CCS 20 using GPRS (General Packet Radio Service), VHF, wireless IEEE 802.11 communication and/or satellite networks that implement either Internet or ACARS^{SM} (Airplane Communications and Recording System) protocols. ACARS^{SM} can be provided by ARINC, Inc. of Annapolis, MD or SITA of Geneva, Switzerland.

The CMC 12 is communicatively connected to the OCS 14 and to a plurality of sensors, meters, and various other mobile platform subsystems 21. The CMC 12 monitors the sensors, meters and subsystems 21 to automatically detect faults that occur during operation of the mobile platform 18 and collects fault data regarding the detected faults. The fault data includes data that details problems with the mobile platform 18 or problems with any system or subsystem of the mobile platform 18 that were detected during the operation of the mobile platform 18, e.g. a solenoid misfire or the temperature of a component is out of range. The CMC 12 automatically transmits the fault data to the CCS 20 where it is stored and made accessible by maintenance crews.

The OCS 14 can be a stand alone system or a subsystem of any other system, network or component onboard the mobile platform 18. For example, in various embodiments the OCS 14 is an electronic travel aid utilized by an operator of the mobile platform 18 to enhance ease and efficiency of many tasks the operator must perform during operation of the mobile platform 18. An exemplary electronic travel aid utilized by some airlines is referred to as an electronic flight bag (EFB). Alternatively, the OCS 14 can be a subsystem of an onboard LAN or any other onboard mobile platform control system.

The OCS 14 includes a processor 22 for executing all functions of the OCS 14 and an electronic storage device (ESD) 26 for electronically storing a first portion 28A of an electronic logbook (ELB) software application 28, and other applications, data, information and algorithms. The first portion 28A of the ELB software application 28 will be referred to herein as simply the ELB1 28A. The OCS 14 additionally includes a database 30. The OCS database 30 is an electronic memory device, i.e. computer readable medium, for storing large quantities of data organized to be accessed and utilized during various operation of the DASS 10. For example, a plurality of look-up tables containing maintenance data, fault data, maintenance procedures and mobile platform metrics may be electronically stored on the OCS database 30 for access and use by the DASS 10 and users of the DASS 10.

The OCS ESD 26 can be any computer readable medium device suitable for electronically storing such things as data, information, algorithms and/or software programs executable by the OCS processor 22. For example, the OCS ESD 26 can be a hard drive, a Zip drive, a CDRW drive, a thumb drive or any other electronic storage device. The OCS 14 additionally includes a display 32 for illustrating graphical and textual data, forms and other information, and an input device 34 such as a keyboard, mouse, stylus, touch screen or joy stick for inputting data and information to the OCS 14 to be stored on the OCS ESD 26. It should be understood that the OCS processor, ESD, display and input device 22, 26, 32 and 34 can be components of a stand alone computer based system, i.e. the OCS 14, or components of a larger system, such as an onboard LAN or an onboard mobile platform control system that collectively comprise the OCS 14. Alternatively, the OCS 14 can be a stand alone system that is connectable to a larger system, e.g. an onboard LAN, such that various ones of the OCS processor, ESD, display and input device 22, 26, 32 and 34 are included in the stand alone OCS 14 and others are included in the larger system.

The ELB1 28A is executed by the OCS processor 22 and utilized by mobile platform crew to enter mobile platform metrics and fault data and store the data in the OCS ESD 26 as the mobile platform 18 travels from its origination point to its destination. The OCS 14 is adapted to communicate the data to the CCS 20 as the mobile platform 18 is in transit or when the mobile platform 18 reaches a mobile platform destination terminal that can include the CCS 20. Generally, the OCS 14 selectively communicates the data to the CCS 20 via an automatically selected communication means, e.g. an automatically selected wireless communication channel. That is, the OCS 14 will communicate the data to the CCS 20 using an automatically selected one of a plurality of available communication channels. For example, if a general packet radio service (GPRS) channel, a wireless IEEE 802.11 channel, a VHF and satellite networks channel and a broadband satellite are available, the OCS 14 will automatically select a desired channel and communicate the data to the CCS 20 via that selected channel.

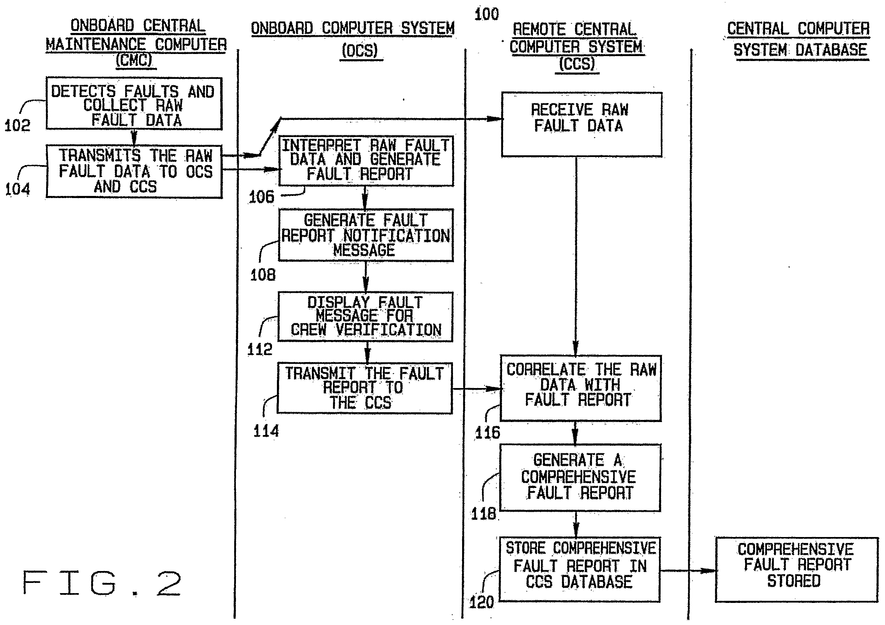

Referring now to Figure 2, a flow chart 100 is provided that illustrates operation of the DASS 10, whereby metric and fault data is automatically sensed, recorded, sent from the OCS 14 to the CCS 20, and correlated, in accordance with various embodiments of the present invention. As described above, the CMC 12 monitors the sensors, meters and subsystems 21 to automatically detect faults and collect fault data during operation of the mobile platform 18, as indicated at 102. The CMC 12 then automatically transmits the fault data to the CCS 20 where the data is stored. Additionally, the OCS processor 22 executes the ELB1 28A such that the OCS 14 communicates with the CMC 12 so that the fault data is also sent to the OCS 22, as indicated at 104. The ELB1 28A interprets the fault data and generates one or more electronic fault log forms that has one or more interactive data fields containing a description of the fault, as indicated at 106.

More specifically, the ELB1 28A interprets the fault data from the CMC 12, translates the data in to text, symbols and/or codes interpretable by the mobile platform crew. The ELB1 28A inserts the text, symbols and/or codes into one or more appropriate interactive information and data fields of the fault log form, thereby at least partially pre-completing the fault log form. The at least partially pre-completed fault log form will be referred to herein as a draft fault report. In various embodiments, the ELB1 28A displays the at least partially pre-completed fault log form, i.e. draft fault report, on the OCS display 32 where it is viewable by the mobile platform crew. In various other embodiments, when the ELB1 28A generates the draft fault report, the ELB1 28A generates a fault notification message, viewable by the mobile platform crew, indicating a draft fault report has been generated, as indicated at 108. The fault notification message can be in the form of a 'pop-up' type message presented on the OCS display 32, illumination of a light or LED viewable by the crew, presenting a symbol or icon on the OCS display 32, an audible tone, ring or sound generated by the OCS 14, or any other suitable message that informs the crew that a fault log form has been generated and at least partially pre-completed by the ELB1 28A.

When a fault notification message is generated, the mobile platform crew can choose to view the draft fault report immediately or at a later, more convenient time. Not all faults detected and recorded by the CMC 12 are observable by the mobile platform crew. Faults occurring that are observable by the mobile platform crew are referred to herein as mobile platform cabin (MPC) faults. MPC faults can be any fault observable by the mobile platform crew throughout the mobile platform 18. In various embodiments, when the CMC 12 detects a fault, the CMC 12 will identify the fault as a MPC fault or a non-MPC fault. If the fault is identified as an MPC fault, the CMC 12 will assign an identification code to the fault that identifies the faults as a MPC fault and classifies the fault as specific type or class of MPC fault, as indicated at 110. That is, the CMC 12 will include identification data in the fault data communicated to the OCS 14 that identifies the faults as a MPC fault and classifies the fault as specific type or class of MPC fault. For example, the fault may be classified based on the urgency of response needed to the fault, or the type of sensor, meter or sub-system 21 that detected the fault, or both. Subsequently, when the ELB1 28A interprets the fault data, if the fault is identified as a MPC fault the ELB1 28A will pre-complete a draft fault report as described above. Additionally, the ELB1 28A will generate a notification message that properly indicates to the crew the type or class of MPC fault. Therefore, the crew can easily decide when the draft fault report should be viewed. If the fault is identified as a non-MPC fault the ELB1 28A will disregard the fault data.

When the crew desires to view the draft fault report, the ELB1 28A allows the crew member view the draft fault report whereby the crew can verify, edit, accept or reject the particular MPC draft fault report, as indicated 112. Additionally, if the fault log form has interactive fields that are not pre-completed by the ELB1 28A, the crew can complete these fields using the OCS input device 34. Thus, the crew can compare the description of the MPC fault generated by the CMC 12 with what was observed within the mobile platform cabin, complete uncompleted fault log fields, and verify, edit, accept or reject the particular MPC fault log entry accordingly. Alternatively, the crew can decide to postpone completing and accepting/rejecting the MPC fault log entry on until a later time. The OCS processor 22 stores the MPC draft fault report, whether completed, not completed, accepted or rejected in the OCS ESD 26 to be downloaded to the CCS 20, as described below. Thus, the ELB1 28A pre-completes various fault data fields of the fault data log forms, thereby saving the mobile platform crew from having to enter a description of the fault by hand and also providing a more accurate and detailed description of the fault.

It should be understood that in addition to the ELB1 28A interpreting CMC 12 fault data and pre-completing MPC draft reports for the crew, the ELB1 28A also provides blank log forms that can be utilized by the crew to create crew generated fault reports. That is, the ELB1 28A provides blank log forms in which the crew can input data and text, via OCS input device 34, into the interactive fields to describe a MPC or log a MPC fault report regarding a MPC that was not detected by the CMC 12. Generally, the ELB1 28A provides the ability for a crew member to navigate a fault manual included in the ELB1 28A to prepare and complete a fault report form. For example, the ELB1 28A provides text entry searches that essentially provide the ability to browse the fault manual and graphically 'drill' down through the fault manual to complete all the fields of the fault report.

The CCS 20, referring again to Figure 1, includes at least one processor 38, at least one database 42, at least one display 46, at least one electronic storage device

(ESD) 50 and at least one input device 54. The CCS display 46 can be any display suitable for visually presenting graphics, text and data to a user of the DASS 10. The CCS input device 54 can be any device adapted to input data and/or information into CCS 20, for example a keyboard, a mouse, a joystick, a stylus, a scanner, a video device and/or an audio device. The CCS ESD 50 can be any computer readable medium device suitable for electronically storing a second portion 28B of the ELB 28, and such other things as data, information and algorithms and/or software programs executable by the CCS processor 38. For example, the CCS ESD 50 can be a hard drive, a Zip drive, a CDRW drive, a thumb drive or any other electronic storage device. The second portion 28B of the ELB 28 will be referred to herein simply as the ELB2 28B.

The CCS database 42 is also an electronic memory device, i.e. computer readable medium, for storing large quantities of data organized to be accessed and utilized during various operation of the DASS 10. For example, a plurality of look-up tables containing maintenance data, fault data, maintenance procedures and mobile platform metrics may be electronically stored on the CCS database 42 for access and use by the DASS 10 and users of the DASS 10. The CCS processor 38 controls all operations of the CCS 20. For example, the CCS processor 38 controls communications and data transfers between the CCS 20 and the OCS 14 and between the CCS 20 and the CMC 12. The CCS processor 38 additionally controls displaying graphics and data on the CCS display 46, interpreting and routing information and data input by the CCS input device 54 and the executing various algorithms stored on the CCS ESD 42. Furthermore, the CCS processor 38 executes the ELB2 28B to store downloaded data in the CCS database 42. The downloaded data includes CMC 12 transmitted fault data, ELB fault reports transmitted by the ELB1 28A, which includes CMC 12 generated MPC fault reports that have been completed by the crew, MPC fault reports generated by the crew. Further yet, the CCS processor 38 executes the ELB2 28B to coordinate or correlate the fault data transmitted to the CCS 20 by the CMC 12 and the fault reports transmitted to the CCS 20 from the OCS 14, as described below.

In various embodiments, the DASS 10 further includes a portable electronic device (PED) 58, e.g. a laptop computer, PDA or any other such device, that communicates with the CCS 20 and/or OCS 14 via a wired or wireless connection. The PED 58 is adapted to access and utilize data stored in the CCS database 42 or the OCS database 30 and also to input data to the CCS 20 or OCS 14 to be stored in the CCS database 42 of OCS database 30 and uploaded to the OCS ESD 26 for utilization by the ELB1 28A, if desirable. The PED 58 displays logbook data in a format suitable for use as a work management tool utilized to return the mobile platform 18 to service. The PED 58 can contain such information and data as lists of required work, e.g. work orders, deferred maintenance actions and unresolved fault reports and any other assigned work found in the CCS database 42 or the OCS database 30.

The mobile platform metrics and the MPC fault reports, as well as fault data detected the CMC 12 are downloaded, i.e. transmitted, from the OCS 14 and CMC 12 to the CCS 20, as indicated at 114. The downloaded metrics and fault data are correlated by the ELB2 28B, as indicated at 116. The correlated data can be shared with mobile platform performance monitoring and maintenance systems (not shown). The mobile platform performance monitoring and maintenance systems may be software applications stored on the CCS ESD 50 or may be separate computer based systems communicatively linked with the CCS 20 and/or the OCS 14. The mobile platform performance monitoring and maintenance systems ensure that regularly scheduled maintenance is performed and that the mobile platform 18 and all systems onboard are maintained in proper operational order. Additionally, the metrics and correlated fault reports stored in the CCS database 42 and/or the OCS database 30 can be accessed and utilized, via the PED 58, by maintenance personnel responsible for performing the maintenance and repairs to the mobile platform 18.

The CCS 20 further includes a first portion 62A of a communication management function (CMF) stored on the CCS ESD 50. A second portion 62B of the CMF is stored on the OCS ESD 26. The first and second portions 62A and 62B of the CMF will be respectively referred to herein as the CMF1 62A and the CMF2 62B and collectively referred to herein as the CMF 62. Generally, the CMF 62 provides application program interfaces (APIs) to allow the ELB1 28A and the ELB2 28B to communicate.

The fault data communicated to the CCS 20 by the CMC 12 will not be the exact same information and data included in the MPC fault reports communicated to the CCS 20 by the ELB1 28A of the OCS 14. However, CMC 12 fault data and the data included in ELB MPC fault reports will have content data that is very similar. For example, in MPC draft fault reports generated by the ELB1 28A, the ELB1 28A will interpret the fault data from the CMC 12 and assign a particular fault code to the fault, which is included in the MPC draft fault report. Thus, the MPC fault report sent to the CCS 20 by the OCS 14 will include a fault code, while the correlating CMC 12 fault data sent to the CCS 20 will not include the fault code. As a further example, the ELB1 may only interpret a portion of the data included in the CMC 12 fault data to generate the draft MPC fault report. Therefore, the OCS 14 MPC fault report sent to the CCS 20 may include less information regarding a particular fault than the correlating CMC 12 fault data sent to the CCS 20. As a still further example, the crew may edit or add information to a particular ELB MPC draft fault report such that the MPC fault report sent to the CCS 20 by the OCS 14 may include more information regarding a particular fault than the correlating CMC 12 fault data sent to the CCS 20.

To accommodate for such differences in data by the CMC 12 and the OCS 14, and to obtain the most comprehensive and accurate data regarding MPC faults, the ELB2 28B will correlate the fault data sent from the CMC 12 with the MPC fault reports sent from the OCS 14. More particularly, the ELB2 28B will identify the specific ELB MPC fault report message that relates to same fault as a specific CMC 12 fault data message. Therefore, the information included in a MPC fault report message generated by the ELB1 28A from specific fault data regarding a particular MPC fault detected by the CMC 12, as described above, will be matched by the ELB2 28B with the CMC 12 fault data message communicated to the CCS 20 regarding that specific MPC fault. The ELB2 28B will then compile, compare, correlate, coordinate and/or assimilate the fault data included in both the MPC fault report message and the CMC 12 fault data message, regarding a particular MPC fault, to generate a comprehensive MPC fault report, as indicated at 118. The comprehensive MPC fault report is then stored in the CCS 20 database 42 and made accessible to the mobile platform maintenance crew, via the PED 58, and to one or more mobile platform provider computer systems or networks, as indicated at 120.

It should be understood that CCS 20 could be communicating with a plurality of mobile platforms 18, each sending ELB MPC fault report messages and CMC 12 fault data messages to the CCS 20. Generally, all the ELB MPC fault report messages and CMC 12 fault data messages from each mobile platform 18 are stored in the CCS database 42. Thus, the CCS processor 38 executes the ELB2 28B to correlate all the ELB MPC fault report messages and CMC 12 fault data messages from each mobile platform 18. In various embodiments, the ELB2 28B correlates the ELB MPC fault report messages with the CMC 12 fault data messages based on various fault attributes or characteristics, such as the type of fault, the fault identifier, an identification number of the mobile platform 18 from which the messages were sent, what time MPC faults occurred, etc.

Referring again to Figure 1, the ELB1 28A is executed and utilized by mobile platform crew to enter mobile platform operation and technical log information and store the log information in the OCS ESD 26, as the mobile platform travels from its origination point to its destination. Operation and technical log information includes such things as mobile platform metrics and fault information regarding the itinerary, schedule and operational performance of the mobile platform. As described further below, the OCS 14 is adapted to communicate the log information to the CCS 20 as the mobile platform 18 is in transit or when the mobile platform reaches a terminal including the CCS 20 at a destination of the mobile platform 18.

Generally, the OCS processor 22 executes the ELB1 28A to communicate with other systems, such as one or more central maintenance computers (CMCs) 36, onboard the mobile platform 18 and generate electronic log forms that are displayed on the OCS display 32. In various embodiments, the log forms include interactive information and data fields for a crew member of the mobile platform to read and/or fill out, utilizing the OCS input device 34, regarding metrics and fault data for the mobile platform. Additionally, the CMC 36 can communicate detected faults to the ELB1 28A and the ELB1 28A will automatically complete various data fields in the log forms so that the crew member can verify, edit, accept or reject the particular logbook entry. The OCS processor 22 stores the metrics and/or fault data input or accepted by the crew member in the OCS ESD 26 to be downloaded to the CCS 20, as described below.

The CCS 20 includes at least one processor 38, at least one database 42, at least one display 46, at least one electronic storage device (ESD) 50 and at least one input device 54. The CCS display 46 can be any display suitable for visually presenting graphics, text and data to a user of the DASS 10. The CCS input device 54 can be any device adapted to input data and/or information into CCS 20, for example a keyboard, a mouse, a joystick, a stylus, a scanner, a video device and/or an audio device. The CCS ESD 50 can be any computer readable medium device suitable for electronically storing a second portion 28B of the ELB 28, and such other things as data, information and algorithms and/or software programs executable by the CCS processor 38. For example, the CCS ESD 50 can be a hard drive, a Zip drive, a CDRW drive, a thumb drive or any other electronic storage device. The second portion 28B of the ELB 28 will be referred to herein simply as the ELB2 28B.

The CCS database 42 is also an electronic memory device, i.e. computer readable medium, for storing large quantities of data organized to be accessed and utilized during various operation of the DASS 10. For example, a plurality of look-up tables containing maintenance data, fault data, maintenance procedures and mobile platform metrics may be electronically stored on the CCS database 42 for access and use by the DASS 10 and users of the DASS 10. The CCS processor 38 controls all operations of the CCS 20. For example, the CCS processor 38 controls communications, e.g. wired or wireless, and data transfers between the CCS 20 and the OCS 14, displaying graphics and data on the CCS display 46, interpreting and routing information and data input by the CCS input device 54 and the executing various algorithms stored on the CCS ESD 50. Additionally, the CCS processor 38 executes the ELB2 28B to store downloaded data in the CCS database 42.

In various embodiments, the DASS 10 further includes a portable electronic device (PED) 58, e.g. a laptop computer, PDA or any other such device, that communicates with the CCS 20 and/or OCS 14 via a wired or wireless connection. The PED 58 is adapted to access and utilize data stored in the CCS database 42 or the OCS database 30 and also to input data to the CCS 20 or OCS 14 to be stored in the CCS database 42 of OCS database 30 and uploaded to the OCS ESD 26 for utilization by the ELB1 28A, if desirable. The PED 58 displays logbook data in a format suitable for use as a work management tool utilized to return the mobile platform to service. The PED 58 can contain such information and data as lists of required work, e.g. work orders, deferred maintenance actions and unresolved fault reports and any other assigned work found in the CCS database 42 or the OCS database 30

The mobile platform metrics and fault data are downloaded to the CCS 20 so that the data can be shared with mobile platform performance monitoring and maintenance systems (not shown). The mobile platform performance monitoring and maintenance systems may be software applications stored on the CCS ESD 50 or may be separate computer based systems communicatively linked with the CCS 20 and/or the OCS 14. The mobile platform performance monitoring and maintenance systems ensure that regularly scheduled maintenance is performed and that the mobile platform 18 and all systems onboard are maintained in proper operational order. Additionally, the metrics and fault data stored in the CCS database 42 and/or the OCS database 30 can be accessed and utilized, via the PED 58, by maintenance personnel responsible for performing the maintenance and repairs to the mobile platform 18. The metrics and fault data stored in the CCS database 42 and/or the OCS database 30 are synchronized whenever connectivity is established between the OCS 14 and the CCS 20.

The CCS 20 further includes a first portion 62A of a communication management function (CMF) stored on the CCS ESD 50. A second portion 62B of the CMF is stored on the OCS ESD 26. The first and second portions 62A and 62B of the CMF will be respectively referred to herein as the CMF1 62A and the CMF2 62B and collectively referred to here in as the CMF 62. Generally, the CMF 62 provides application program interfaces (APIs) to allow the ELB1 28A and the ELB2 28B to communicate, as described further below.

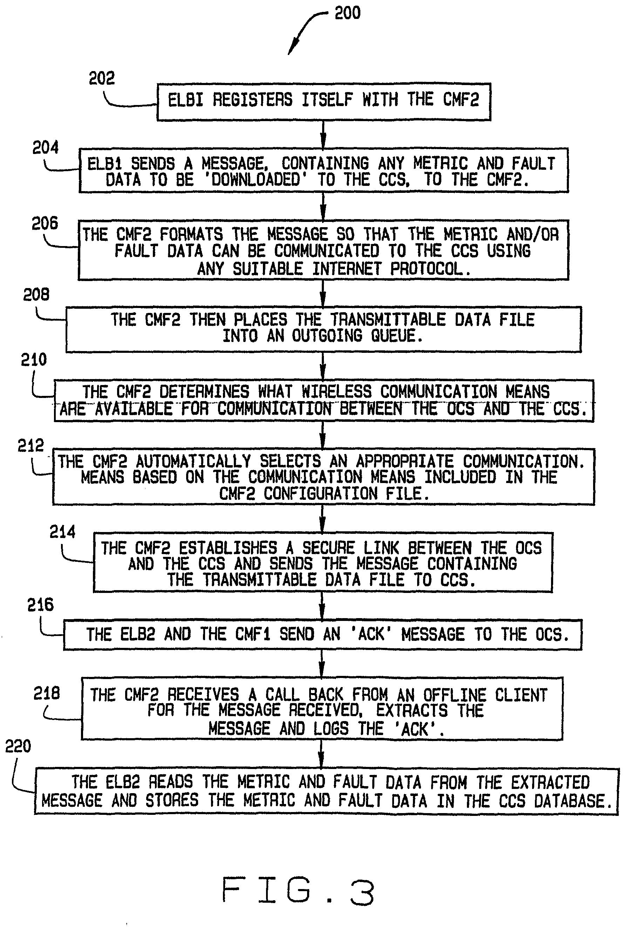

Figure 3 is a flow chart 200 illustrating an operation of the DASS 10 whereby metric and fault data is sent from the OCS 14 to the CCS 20, in accordance with various embodiments of the present invention. Generally, anytime while the mobile platform 18 is en route or when the mobile platform 18 arrives at the destination terminal, a data download operation of the ELB 28 is initiated. Particularly, the CMF2 62B is executed to establish a communication link with the CCS 20 and download the metric and fault data from the OCS ESD 26 to the CCS 20 where the ELB2 28B stores the downloaded data in the CCS database 42. Timing of the data transfer is determined automatically based on logic that segregates communication channels by expense and messages by value as determined by the operator.

More particularly, to initiate communication between the OCS 14 and the CCS 20, the OCS processor 22 executes the ELB1 28A and the CMF2 62B to register the ELB1 28A with the CMF2 62B, as indicated at 202. Once the ELB1 28A is registered with the CMF2 62B, the ELB1 28A sends a message, containing any metric and fault data to be 'downloaded' to the CCS 20, to the CMF2 62B, as indicated at 204. The CMF2 62B then parses the message, generates a unique message identification for the message, converts the message into an encoded data string, and then configures the encoded data string into a transmittable data file so that the metric and/or fault data can be communicated to the CCS 20 using any suitable Internet protocol, as indicated at 206. For example the CMF2 62B can create an extensible markup language (XML) file so that the metric and/or fault data can be communicated to the CCS 20 using any suitable Internet protocol.

The CMF2 62B then places the transmittable data file into a CMF outgoing queue, as indicated at 208. The CMF2 62B can send the message to the CCS 20 via any suitable communication means, e.g. any suitable wired or wireless communication channel. For example, the CMF2 62B can send the message containing the transmittable data file to the CCS 20 using general packet radio service (GPRS), wireless IEEE 802.11, VHF, satellite networks, broadband satellite networks, or a direct wired connection. More specifically, the CMF2 62 includes a configuration file identifying all the desired communication channels the OCS 14 can utilize to communicate with the CCS 20. The number and type of communication channels included in the CMF2 configuration file is application specific and selected by the particular mobile platform provider. For example, a first mobile platform provider may desire to utilize Gatelink IEEE 802.11 and VHF and satellite networks, while a second mobile platform provider may desire to utilize only broadband satellite networks for communication between the OCS 14 and the CCS 20.

More particularly, the CMF2 62B determines and keeps track of what communication channels are available for communication between the OCS 14 and the CCS 20, as indicated at 210. The CMF2 62B automatically selects an appropriate communication channel based on the communication means included in the CMF2 configuration file determined by the operator based on expense of the channel and the value of the message, as indicated at 212. Utilizing the automatically selected communication channel, the CMF2 62B establishes a secure link between the OCS 14 and the CCS 20 and sends the message containing the transmittable data file to CCS 20, via the secure link, as indicated at 214. The CMF2 62B may store more than one message in the CMF outgoing queue and send only those messages that the priority rules, as determined by expense of the channel and value of the message, dictate should be sent via the presently established secure link. The CMF2 62 can then establish another secure link, as described above, using another available channel to send other messages in the CMF outgoing queue that the priority rules deem should be sent by the newly established secure link. If the priority rules and the messages in the CMF outgoing queue do not match any of the available channels, the CMF2 62B will store the messages until the necessary available channels are available.

Furthermore, the CMF2 62B establishes the secure link using any suitable certificate exchange method. Once the CMF2 62B sends the message containing the transmittable data file to CCS 20 over the secure link, the CCS processor 38 executes the ELB2 28B and the CMF1 62A to send an 'ACK' message to the OCS 14 acknowledging receipt of the message containing the transmittable data file, as indicated at 216. The CMF2 62B receives a call-back from an offline client for the message received, extracts the fault and metric data message from the transmittable data file and logs the 'ACK', as indicated at 218. Once the CMF1 62A sends the 'ACK' message to the OCS 14, the ELB2 28B reads the metric and fault data from the extracted message and stores the metric and fault data in the CCS database 42, as described at 224.

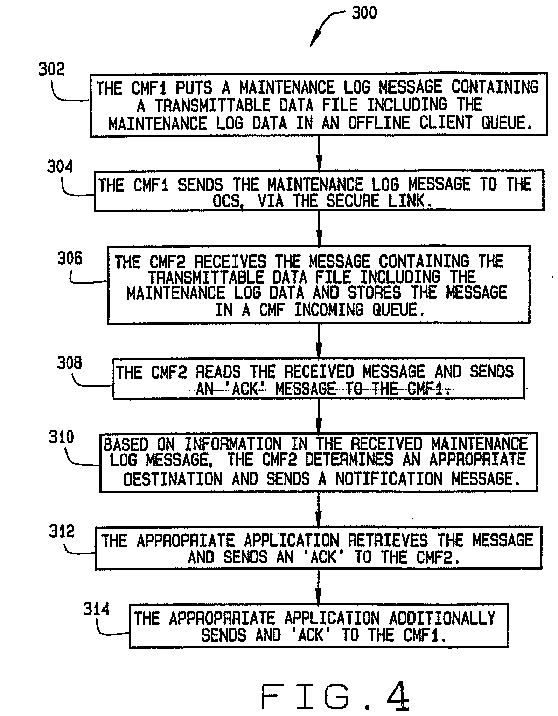

Figure 4 is a flow chart 300 illustrating an operation of the DASS 10, whereby the CCS 20 sends maintenance log data, including such data as maintenance actions data and maintenance release data, to the OCS 14, in accordance with various embodiments of the present invention. The metric and fault data received from the OCS 14 and stored in the CCS database 42 is accessible by mobile platform maintenance personnel, via the PED 58. Additionally, once the maintenance personnel have completed maintenance repair, upgrades and/or checks in accordance with the metric and fault data retrieved from the CCS database 42, the maintenance personnel can enter and store the maintenance log data in the CCS database 42, via the PED 58. Once the maintenance log data is stored in the CCS database 42, the CMF1 62A puts a maintenance log message containing a transmittable data file including the maintenance log data in an offline client queue, as indicated at 302. For example, the CMF1 62A could put the maintenance log message containing an extensible markup language (XML) file including the maintenance log data in the offline client queue.

Next, the CMF1 62A sends the maintenance log message to the OCS 14, via the secure link, as indicated at 304. The CMF2 62B receives the message containing the transmittable data file including the maintenance log data and stores the message in a CMF incoming queue, as indicated at 306. The CMF2 62B reads the received message and sends an 'ACK' message to the CMF1 62A, as indicated at 308. Based on information in the received maintenance log message, the CMF2 62B determines an appropriate destination, e.g. an appropriate application executable by the OCS processor 22, and sends a notification message, as indicated at 310. The appropriate application retrieves the message and sends an 'ACK' to the CMF2 62A, as indicated at 312. Finally, the appropriate application additionally sends an 'ACK' to the CMF1 62A, as indicated at 314. The exchange of 'ACKs' indicated at 312 and 314 ensure the appropriate synchronization of data between the CCS database 42 and the OCS database 30.

The DASS 10 provides rapid and human intervention-less movement of data by use of communication channels, e.g. wired or wireless, and improved availability of logbook data, thereby improving operational efficiency and reducing labor costs and other operating costs, e.g. schedule delays, of moving the metric and fault data to mobile platform health maintenance systems, e.g. the CCS 20 or other network connected to the CCS 20, in a timely fashion. Additionally, the DASS 10 coordinates and synchronizes the metric and fault data between the OCS 14, the CCS 20 and the PED 58 and enables near real-time status on the health of a particular mobile platform while it is en route.

Those skilled in the art can now appreciate from the foregoing description that the broad teachings of the present invention can be implemented in a variety of forms. Therefore, while this invention has been described in connection with particular examples thereof, the true scope of the invention is defined by the following claims.

## Claims

1. A system for managing mobile platform fault data, said system comprising:
a mobile platform comprising:
a central maintenance computer 'CMC' adapted to transmit raw fault data indicative of a fault occurring onboard the mobile platform to an onboard computer 'OCS' and to a remote central computer system 'CCS' located remotely from the mobile platform; and
the OCS, the OCS being adapted to:
receive the raw fault data transmitted from the CMC;
generate at least one electronic mobile platform cabin 'MPC' draft fault report automatically upon receiving the raw fault data received by the OCS utilizing a first portion 'ELB1' of an electronic logbook software application 'ELB', wherein to generate the at least one MPC draft fault report, the OCS is further adapted to interpret the raw fault data and translate the raw fault data into text, symbols and/or codes interpretable by a mobile platform crew and to insert the text, symbols and/or codes into one or more appropriate interactive information and data fields of the electronic MPC draft fault report;
generate an MPC draft fault report notification message viewable on an OCS display; and
transmit the at least one MPC draft fault report automatically, after being verified, edited, accepted or rejected by the mobile platform crew, as an at least one MPC fault report; and
the CCS, the CCS being adapted to:
receive the raw fault data;
receive the at least one MPC fault report transmitted by the OCS automatically; and
correlate the at least one MPC fault report with the raw fault data automatically upon receiving the at least one MPC fault report by utilizing a second portion 'ELB2' of the electronic logbook software application 'ELB'.

2. The system of claim 1, wherein the OCS is further adapted to store the at least one MPC draft fault report in an OCS storage device.

3. The system of claim 1, wherein to generate the at least one MPC draft fault report notification message, the OCS is further adapted to assign an identification code to the fault that classifies the fault as a specific class of MPC fault.

4. The system of claim 1, wherein the ELB2 is adapted to compile, compare, correlate, coordinate and/or assimilate fault data included in both the MPC fault report and the raw fault data, regarding a particular MPC fault, to automatically generate a comprehensive at least one MPC fault report and store the comprehensive at least one MPC fault report in a CCS database.

5. The system of any preceding claim, wherein the mobile platform is an aircraft.

6. The system of any preceding claim, wherein the CMC is communicatively connected to the OCS and to a plurality of sensors, meters and other mobile platform subsystems.

7. The system of claim 6, wherein the CMC is configured to monitor the sensors, meters and other mobile platform subsystems to automatically detect faults that occur during operation of the mobile platform and collect fault data regarding the detected faults.

8. The system of claim 7, wherein the detected faults comprise a solenoid misfire or a temperature of a component being out of range.

9. A method for managing mobile platform fault data, said method comprising:
automatically collecting raw fault data regarding at least one fault that occurs onboard the mobile platform utilizing a central maintenance computer 'CMC' onboard the mobile platform;
automatically transmitting the raw fault data from the CMC to an onboard computer system 'OCS' of the mobile platform and to a central computer system 'CCS' located remotely from the mobile platform;
receiving, by the OCS and by the CCS, the raw fault data transmitted from the CMC;
automatically generating at least one electronic mobile platform cabin 'MPC' draft fault report from the raw fault data received by the OCS utilizing a first portion 'ELB1' of an electronic logbook software application 'ELB',
wherein automatically generating the at least one 'MPC' draft fault report comprises interpreting the raw fault data from the CMC and translating the raw fault data into text,
symbols and/or codes interpretable by a mobile platform crew and inserting the text, symbols and/or codes into one or more appropriate interactive information and data fields of the electronic MPC draft fault report;
automatically generating an MPC draft fault report notification message viewable on an OCS display;
automatically transmitting, by the OCS, the at least one MPC draft fault report, after being verified, edited, accepted or rejected by the mobile platform crew, as an at least one MPC fault report;
automatically downloading the at least one MPC fault report to the CCS from the OCS; and
automatically correlating at the CCS the at least one MPC fault report with the raw fault data utilizing a second portion 'ELB2' of the electronic logbook software application 'ELB'.

10. The method of claim 9 further comprising storing the at least one electronic MPC draft fault report in an electronic storage device 'ESD' of the OCS.

11. The method of claim 9, wherein automatically generating the at least one MPC draft fault report notification message comprises assigning an identification code to the fault that classifies the fault as a specific class of MPC fault, utilizing the CMC.

12. The method of claim 9 further comprising the ELB2 compiling, comparing, correlating, coordinating and/or assimilating fault data included in both the MPC fault report and the raw fault data, regarding a particular MPC fault, to automatically generate a comprehensive at least one MPC fault report and storing the comprehensive at least one MPC fault report in CCS database.

13. The method of any of claims 9-12, wherein the mobile platform is an aircraft.

14. The method of any of claims 9-13, wherein the CMC is communicatively connected to the OCS and to a plurality of sensors, meters and other mobile platform subsystems.

15. The method of claim 14, wherein the CMC monitors the sensors, meters and other mobile platform subsystems to automatically detect faults that occur during operation of the mobile platform and collect fault data regarding the detected faults.

## Patentansprüche

1. System zum Verwalten von Mobilplattform-Fehlerdaten, wobei das System aufweist:
eine Mobilplattform, die aufweist:
einen zentralen Wartungscomputer 'CMC', der dazu ausgelegt ist, Rohfehlerdaten, die einen Fehler angeben, der an Bord der Mobilplattform auftritt, an einen Bordcomputer 'OCS' und an ein fernes zentrales Computersystem 'CCS', das sich fern von der Mobilplattform befindet, zu übertragen; und
den Bordcomputer, wobei der Bordcomputer ausgelegt ist zum:
Empfangen der von dem zentralen Wartungscomputer übertragenen Rohfehlerdaten;
Erzeugen wenigstens eines elektronischen Mobilplattformkabinen- 'MPC'-Entwurfsfehlerberichts automatisch nach Empfangen der von dem Bordcomputer empfangenen Rohfehlerdaten unter Verwendung eines ersten Abschnitts 'ELB1' einer elektronischen Logbuch-Softwareanwendung 'ELB', wobei, um den wenigstens einen MPC-Entwurfsfehlerbericht zu erzeugen, der Bordcomputer des Weiteren dazu ausgelegt ist, die Rohfehlerdaten zu interpretieren und die Rohfehlerdaten in Text, Symbole und/ oder Codes zu übersetzen, die von einer Mobilplattformcrew interpretiert werden können, und den Text, die Symbole und/ oder Codes in eine oder mehrere geeignete interaktive Informations- und Datenfelder des elektronischen MPC-Entwurfsfehlerberichts einzufügen;
Erzeugen einer MPC-Entwurfsfehlerbericht-Benachrichtigungsnachricht, die auf einem Bordcomputer-Display angesehen werden kann; und
automatischen Übertragen des wenigstens einen MPC-Entwurfsfehlerberichts, nachdem er von der Mobilplattformcrew verifiziert, editiert, akzeptiert oder zurückgewiesen wurde, als wenigstens einen MPC-Fehlerbericht; und
das zentrale Computersystem, wobei das zentrale Computersystem ausgelegt ist zum:
Empfangen der Rohfehlerdaten;
Empfangen des wenigstens einen MPC-Fehlerberichts, der automatisch von dem Bordcomputer übertragen wird; und
automatischen Korrelieren des wenigstens einen MPC-Fehlerberichts mit den Rohfehlerdaten nach Empfangen des wenigstens einen MPC-Fehlerberichts durch Verwenden eines zweiten Abschnitts 'ELB2' der elektronischen Logbuch-Softwareanwendung 'ELB'.

2. System nach Anspruch 1, wobei der Bordcomputer des Weiteren dazu ausgelegt ist, den wenigstens einen MPC-Entwurfsfehlerbericht in einer Bordcomputer-Speichervorrichtung zu speichern.

3. System nach Anspruch 1, wobei, um die wenigstens eine MPC-Entwurfsfehlerberichts-Benachrichtigungsnachricht zu erzeugen, der Bordcomputer des Weiteren dazu ausgelegt ist, dem Fehler einen Identifizierungscode zuzuweisen, der den Fehler als eine spezifische Klasse von MPC-Fehler klassifiziert.

4. System nach Anspruch 1, wobei der 'ELB2' dazu ausgelegt ist, Fehlerdaten, die sowohl in dem MPC-Fehlerbericht als auch in den Rohfehlerdaten enthalten sind, hinsichtlich eines bestimmten MPC-Fehlers zu kompilieren, vergleichen, korrelieren, koordinieren und/oder assimilieren, um automatisch einen umfassenden wenigstens einen MPC-Fehlerbericht zu erzeugen und den umfassenden wenigstens einen MPC-Fehlerbericht in einer zentralen Computersystem-Datenbank zu speichern.

5. System nach einem der vorhergehenden Ansprüche, wobei die Mobilplattform ein Flugzeug ist.

6. System nach einem der vorhergehenden Ansprüche, wobei der zentrale Wartungscomputer kommunikativ mit dem Bordcomputer und mit einer Vielzahl von Sensoren, Messgeräten und anderen Mobilplattform-Untersystemen verbunden ist.

7. System nach Anspruch 6, wobei der zentrale Wartungscomputer dazu konfiguriert ist, die Sensoren, Messgeräte und anderen Mobilplattform-Untersysteme zu überwachen, um automatisch Fehler zu ermitteln, die während des Betriebs der Mobilplattform auftreten, und Fehlerdaten hinsichtlich der ermittelten Fehler zu sammeln.

8. System nach Anspruch 7, wobei die ermittelten Fehler ein Solenoidversagen oder eine außerhalb des zulässigen Bereichs liegende Temperatur einer Komponente aufweisen.

9. Verfahren zum Verwalten von Mobilplattform-Fehlerdaten, wobei das Verfahren aufweist:
automatisches Sammeln von Rohfehlerdaten hinsichtlich wenigstens eines Fehlers, der an Bord der Mobilplattform auftritt, unter Verwendung eines zentralen Wartungscomputers 'CMC' an Bord der Mobilplattform;
automatisches Übertragen der Rohfehlerdaten von dem zentralen Wartungscomputer an ein Bordcomputersystem 'OCS' der Mobilplattform und an ein zentrales Computersystem 'CCS', das sich fern von der Mobilplattform befindet;
Empfangen, durch das Bordcomputersystem und durch das zentrale Computersystem, der von dem zentralen Wartungscomputer übertragenen Rohfehlerdaten;
automatisches Erzeugen wenigstens eines elektronischen Mobilplattformkabinen- 'MPC' -Entwurfsfehlerberichts aus den von dem Bordcomputersystem empfangenen Rohfehlerdaten unter Verwendung eines ersten Abschnitts 'ELB1' einer elektronischen Logbuch-Softwareanwendung 'ELB';
wobei das automatische Erzeugen des wenigstens einen 'MPC'-Entwurfsfehlerberichts das Interpretieren der Rohfehlerdaten von dem zentralen Wartungscomputer und das Übersetzen der Rohfehlerdaten in Text, Symbole und/oder Codes aufweist, die von einer Mobilplattformcrew interpretiert werden können, und das Einfügen des Texts, der Symbole und/oder Codes in eine oder mehrere geeignete interaktive Informations- und Datenfelder des elektronischen MPC-Entwurfsfehlerberichts;
automatisches Erzeugen einer MPC-Entwurfsfehlerbericht-Benachrichtigungsnachricht, die auf einem
Bordcomputersystem-Display angesehen werden kann;
automatisches Übertragen, durch das Bordcomputersystem, des wenigstens einen MPC-Entwurfsfehlerberichts, nachdem er von der Mobilplattformcrew verifiziert, editiert, akzeptiert oder zurückgewiesen wurde, als wenigstens einen MPC-Fehlerbericht;
automatisches Herunterladen des wenigstens einen MPC-Fehlerberichts auf das zentrale Computersystem von dem Bordcomputersystem; und
automatisches Korrelieren des wenigstens einen MPC-Fehlerberichts mit den Rohfehlerdaten an dem zentralen Computersystem unter Verwendung eines zweiten Abschnitts 'ELB2' der elektronischen Logbuch-Softwareanwendung 'ELB'.

10. Verfahren nach Anspruch 9, das des Weiteren das Speichern des wenigstens einen elektronischen MPC-Entwurfsfehlerberichts in einer elektronischen Speichervorrichtung 'ESD' des Bordcomputersystems aufweist.

11. Verfahren nach Anspruch 9, wobei das automatische Erzeugen der wenigstens einen MPC-Entwurfsfehlerberichts-Benachrichtigungsnachricht das Zuweisen eines Identifizierungscodes zu dem Fehler aufweist, der den Fehler als eine spezifische Klasse von MPC-Fehler klassifiziert, unter Verwendung des zentralen Wartungscomputers.

12. Verfahren nach Anspruch 9, das des Weiteren aufweist, dass das ELB2 Fehlerdaten, die sowohl in dem MPC-Fehlerbericht als auch in den Rohfehlerdaten enthalten sind, hinsichtlich eines bestimmten MPC-Fehlers kompiliert, vergleicht, korreliert, koordiniert und/oder assimiliert, um automatisch einen umfassenden wenigstens einen MPC-Fehlerbericht zu erzeugen, und den umfassenden wenigstens einen MPC-Fehlerbericht in einer zentralen Computersystem-Datenbank speichert.

13. Verfahren nach einem der Ansprüche 9-12, wobei die Mobilplattform ein Flugzeug ist.

14. Verfahren nach einem der Ansprüche 9-13, wobei der zentrale Wartungscomputer kommunikativ mit dem Bordcomputersystem und mit einer Vielzahl von Sensoren, Messgeräten und anderen Mobilplattform-Untersystemen verbunden ist.

15. Verfahren nach Anspruch 14, wobei der zentrale Wartungscomputer die Sensoren, Messgeräte und andere Mobilplattform-Untersysteme überwacht, um automatisch Fehler zu ermitteln, die während des Betriebs der Mobilplattform auftreten, und Fehlerdaten hinsichtlich der ermittelten Fehler zu sammeln.

## Revendications

1. Système destiné à gérer des données d'anomalie de plateforme mobile, ledit système comprenant :
une plateforme mobile comprenant :
un ordinateur de maintenance central « CMC » adapté à transmettre des données d'anomalie brutes indiquant une anomalie se produisant à bord de la plateforme mobile à un système d'ordinateur embarqué « OCS » et à un système d'ordinateur central à distance « CCS » situé à distance de la plateforme mobile ; et
l'OCS, l'OCS étant adapté à :
recevoir les données d'anomalie brutes transmises à partir du CMC ;
générer automatiquement au moins un projet de rapport d'anomalie de cabine de plateforme mobile électronique « MPC » suite à la réception des données d'anomalie brutes reçues par l'OCS en utilisant une première portion « ELB1 » d'une application logicielle de journal de bord électronique « ELB », dans lequel afin de générer l'au moins un projet de rapport d'anomalie de MPC, l'OCS est en outre adapté à interpréter les données d'anomalie brutes et traduire les données d'anomalie brutes en texte, symboles et/ou codes interprétables par un équipage de plateforme mobile et à insérer les texte, symboles et/ou codes dans un ou plusieurs champs d'informations et de données interactifs appropriés du projet de rapport d'anomalie électronique de MPC ;
générer un message de notification de projet de rapport d'anomalie de MPC visualisable sur un écran d'OCS ; et
transmettre automatiquement l'au moins un projet de rapport d'anomalie de MPC, après avoir été vérifié, édité, accepté ou rejeté par l'équipage de plateforme mobile, sous la forme d'au moins un rapport d'anomalie de MPC ; et
le CCS, le CCS étant adapté à :
recevoir les données d'anomalie brutes ;
recevoir automatiquement l'au moins un rapport d'anomalie de MPC transmis par l'OCS ; et
corréler automatiquement l'au moins un rapport d'anomalie de MPC avec les données d'anomalie brutes suite à la réception de l'au moins un rapport d'anomalie de MPC en utilisant une seconde portion « ELB2 » de l'application logicielle de journal de bord électronique « ELB ».

2. Système selon la revendication 1, dans lequel l'OCS est en outre adapté à stocker l'au moins un projet de rapport d'anomalie de MPC dans un dispositif de stockage d'OCS.

3. Système selon la revendication 1, dans lequel afin de générer l'au moins un message de notification de projet de rapport d'anomalie de MPC, l'OCS est en outre adapté à attribuer un code d'identification à l'anomalie qui classe l'anomalie sous la forme d'une classe spécifique d'anomalie de MPC.

4. Système selon la revendication 1, dans lequel l'ELB2 est adaptée à compiler, comparer, corréler, coordonner et/ou assimiler des données d'anomalie incluses à la fois dans le rapport d'anomalie de MPC et les données d'anomalie brutes, concernant une anomalie de MPC particulière, à générer automatiquement l'au moins un rapport d'anomalie de MPC complet et stocker l'au moins un rapport d'anomalie de MPC complet dans une base de données de CCS.

5. Système selon une quelconque des revendications précédentes, dans lequel la plateforme mobile est un aéronef.

6. Système selon une quelconque des revendications précédentes, dans lequel le CMC est relié en communication à l'OCS et à une pluralité de capteurs, compteurs et autres sous-systèmes de plateforme mobile.

7. Système selon la revendication 6, dans lequel le CMC est configuré pour surveiller les capteurs, compteurs et autres sous-systèmes de plateforme mobile afin de détecter automatiquement des anomalies qui se produisent pendant le fonctionnement de la plateforme mobile et de collecter des données d'anomalie concernant les anomalies détectées.

8. Système selon la revendication 7, dans lequel les anomalies détectées comprennent un raté de solénoïde ou une température d'un composant qui trouve hors de portée.

9. Procédé destiné à gérer des données d'anomalie de plateforme mobile, ledit procédé comprenant les étapes consistant à :
collecter automatiquement des données d'anomalie brutes concernant au moins une anomalie qui se produit à bord de la plateforme mobile en utilisant un ordinateur de maintenance central « CMC » à bord de la plateforme mobile ;
transmettre automatiquement les données d'anomalie brutes à partir du CMC à un système d'ordinateur embarqué « OCS » de la plateforme mobile et à un système d'ordinateur central « CCS » situé à distance de la plateforme mobile ;
recevoir, par l'OCS et par le CCS, les données d'anomalie brutes transmises à partir du CMC ;
générer automatiquement au moins un projet de rapport d'anomalie de cabine de plateforme mobile électronique « MPC » à partir des données d'anomalie brutes reçues par l'OCS en utilisant une première portion « ELB1 » d'une application logicielle de journal de bord électronique « ELB »,
dans lequel la génération automatique de l'au moins un projet de rapport d'anomalie « MPC » comprend les étapes consistant à interpréter les données d'anomalie brutes provenant du CMC et traduire les données d'anomalie brutes en texte, symboles et/ou codes interprétables par un équipage de plateforme mobile et insérer les texte, symboles et/ou codes dans un ou plusieurs champs d'informations et de données interactifs appropriés du projet de rapport d'anomalie électronique de MPC ;
générer automatiquement un message de notification de projet de rapport d'anomalie de MPC visualisable sur un écran d'OCS ;
transmettre automatiquement, par l'OCS, l'au moins un projet de rapport d'anomalie de MPC, après avoir été vérifié, édité, accepté ou rejeté par l'équipage de plateforme mobile, sous la forme d'au moins un rapport d'anomalie de MPC ;
télécharger automatiquement l'au moins un rapport d'anomalie de MPC vers le CCS à partir de l'OCS ; et
corréler automatiquement au niveau du CCS l'au moins un rapport d'anomalie de MPC avec les données d'anomalie brutes en utilisant une seconde portion « ELB2 » de l'application logicielle de journal de bord électronique « ELB ».

10. Procédé selon la revendication 9, comprenant en outre l'étape consistant à stocker l'au moins un projet de rapport d'anomalie électronique de MPC dans un dispositif de stockage électronique « ESD » de l'OCS.

11. Procédé selon la revendication 9, dans lequel la génération automatique de l'au moins un message de notification de projet de rapport d'anomalie de MPC comprend l'étape consistant à attribuer un code d'identification à l'anomalie qui classe l'anomalie sous la forme d'une classe spécifique d'anomalie de MPC, en utilisant le CMC.

12. Procédé selon la revendication 9, comprenant en outre l'étape consistant pour l'ELB2 à compiler, comparer, corréler, coordonner et/ou assimiler des données d'anomalie incluses à la fois dans le rapport d'anomalie de MPC et les données d'anomalie brutes, concernant une anomalie de MPC particulière, à générer automatiquement l'au moins un rapport d'anomalie de MPC complet et stocker l'au moins un rapport d'anomalie de MPC complet dans une base de données de CCS.

13. Procédé selon une quelconque des revendications 9 à 12, dans lequel la plateforme mobile est un aéronef.

14. Procédé selon une quelconque des revendications 9 à 13, dans lequel le CMC est relié en communication à l'OCS et à une pluralité de capteurs, compteurs et autres sous-systèmes de plateforme mobile.

15. Procédé selon la revendication 14, dans lequel le CMC surveille les capteurs, compteurs et autres sous-systèmes de plateforme mobile afin de détecter automatiquement des anomalies qui se produisent pendant le fonctionnement de la plateforme mobile et de collecter des données d'anomalie concernant les anomalies détectées.
